# EUROPEAN PATENT SPECIFICATION

(11) **EP 4 161 788 B1**
(45) Date of publication and mention of the grant of the patent: **25.09.2024**
(21) Application number: 20732160.5
(22) Date of filing: 05.06.2020
(51) Int. Cl.: B60H 1/00, B60H 1/14, B60H 1/32

(54) **THERMAL MANAGEMENT CONTROL CIRCUIT FOR AN ELECTRIC VEHICLE**
WÄRMEVERWALTUNGSSTEUERUNGSSCHALTUNG FÜR EIN ELEKTROFAHRZEUG
CIRCUIT DE COMMANDE DE GESTION THERMIQUE POUR VÉHICULE ÉLECTRIQUE

(43) Date of publication of application: 12.04.2023
(73) Proprietor: Volvo Truck Corporation, 405 08 Göteborg (SE)
(72) Inventor: MOTHIER, Ronan, 38460 Dizimieu (FR); LEONCINI, Gabriele, 69500 BRON (FR)
(74) Representative: Lavoix
(86) International application number: PCT/EP2020/065590
(87) International publication number: WO 2021/244752

(56) References cited:
- EP-A1- 3 549 799
- EP-B1- 3 549 799
- US-A1- 2019 047 369
- US-B2- 9 650 940

## Description

### Technical Field

This disclosure pertains to the field of thermal management control circuits for electric vehicles having a drive motor, at least one power electronics component to supply the drive motor, a passenger cabin and a battery. This disclosure is directed to thermal management control circuits to maintain the battery within a battery target temperature range and to maintain the at least one power electronics component of the vehicle within a power electronics component temperature range. This disclosure also relates to an electric automotive vehicle equipped with such a thermal management control circuit.

### Background Art

Electric vehicles are increasingly being used as an alternative to internal combustion engine vehicles in order to limit the emission of particles that generate air pollution.

An electric vehicle comprises specific equipments such as a battery to store electric energy and supply this energy to the motor and at least a power electronics component to supply the drive motor of the vehicle. For example, the power electronics component can include one or more high-power output transistor or thyristors with their associated control circuits. These equipments are extremely sensitive to the temperature changes.

To ensure satisfactory performances, the power electronics component needs to be maintained within a power electronics component temperature range and the battery needs to be maintained within a battery temperature range.

Depending on the outdoor temperature conditions and depending on the operating mode of the vehicle, it is therefore sometimes necessary to heat the equipments or to cool the equipments. For example, when the vehicle drives in hot temperature conditions, the battery and the power electronic component need to be cooled. Conversely, when the vehicle starts in cold temperature conditions, the battery and the power electronic component need to be heated.

Thus, there is a need to have an efficient thermal management control circuit to maintain the equipments within their optimal operating temperature range. In particular, the thermal management control circuit must maintain the battery within the desired battery temperature range and the power electronics component within the desired power electronics component temperature range.

It is also advantageous if the thermal management control circuit can additionally maintain the temperature of the passenger cabin of the vehicle within a desired passenger cabin temperature range for the passenger comfort.

It has been proposed, for example in WO2012/161819, to provide a thermal management control circuit having a first loop to control the power electronics component temperature, a second loop to control the battery temperature and a third loop to control the passenger cabin temperature. The loops are connected to one another through several valves. The thermal management control circuit also comprises a heat source to supply heat to the thermal management control circuit and a cold source to supply cold to the thermal management control circuit. The valves are controlled to adapt the cooling or heating needed in each loop.

A thermal management control circuit for a battery and electronic components is disclosed in US 2019/047369 A1.

However, this thermal management control circuit has complex architecture requiring many actuators.

The aim of the invention is to propose an improved thermal management control circuit which has a simpler architecture requiring a limited number of actuators, and which is more economical.

### Summary

According to the invention, it is proposed a thermal management control circuit for an electric vehicle
according to claim 1, having a drive motor, at least one power electronics component to supply the drive motor, a passenger cabin and a battery, the thermal management control circuit comprising:
- a heat pump loop comprising a refrigerant and having a condenser and an evaporator, a vapor line and a liquid line for fluidically coupling the condenser and the evaporator,
- a cooling-heating circuit configured to carry a single liquid fluid and comprising
   - a first circuit portion comprising a first pump configured to circulate the liquid fluid in the cooling-heating circuit, the condenser configured to heat the liquid fluid, and the power electronics component, the first circuit portion being configured to maintain the at least one power electronics component within a power electronics component target temperature range,

   - a second circuit portion comprising a second pump configured to circulate the liquid fluid in the cooling-heating circuit, and the evaporator configured to cool the liquid fluid,
   - a first auxiliary communication circuit portion arranged between the first circuit portion and the second circuit portion and being configured to carry some liquid fluid heated by the condenser from the first circuit portion to the second circuit portion,
the first auxiliary communication circuit portion and the second circuit portion cooperating to maintain the battery within a battery target temperature range, the battery target temperature range being different from the power electronics component target temperature range.

This thermal management control circuit offers an economical solution by using both the condenser and the evaporator of the heat pump loop. The condenser is used as a heat supplier in the first circuit portion and the evaporator is used as a cold supplier in the second circuit portion. The heat pump loop can thus retrieve calories in the liquid fluid carried in the second circuit portion through the evaporator, allowing cooling the liquid fluid in the second circuit portion. And, the heat pump loop can deliver the retrieved calories in the liquid fluid carried in the first circuit portion, allowing heating the liquid fluid carried in the second circuit portion. Energy losses are thus minimized.

An overall temperature offset between first and second circuit portions can be permanently established, thanks to the heat pump loop feature. Therefore, even though a single liquid fluid is used, and first and second circuit portions are fluidically coupled, in cruise operation, there is provided a hot portion and a cold portion with said offset between first and second circuit portions.

The temperature management control of the at least one power electronics component and the battery is done through the single liquid fluid carried by the cooling-heating circuit. The temperature of the liquid fluid depends on its position in the heating-cooling circuit, and can be adapted thanks to the auxiliary communication circuit portion.

The heat dissipated by the at least one power electronics component is also retrieved to be transferred into the liquid fluid carried in the first circuit portion, and further to a radiator and/or to the passenger cabin.

The following features, can be optionally implemented, separately or in combination one with the others.

According to the invention, the second circuit portion comprises a mixing valve configured to selectively mix some liquid fluid cooled by the evaporator and some liquid fluid heated by the condenser coming from the first auxiliary communication circuit portion, thereby allowing to maintain the battery within the battery target temperature range.

The mixing valve allows precise battery temperature control by merging specific proportions of cooled liquid fluid and heated liquid fluid.

According to the invention, the mixing valve is arranged between the evaporator and the battery and has a first entry port configured to let in some liquid fluid cooled by the evaporator and a second entry port configured to let in the liquid fluid carried by the first auxiliary communication circuit portion and an exit port configured to carry the liquid fluid to the battery.

Thus, the mixing valve receives the liquid fluid at its coolest temperature in its first entry port and receives the liquid fluid at its hottest temperature in its second entry port, allowing to provide the largest temperature range to the liquid fluid exiting the mixing valve, and therefore a better battery temperature control.

According to one aspect, the first circuit portion further comprises a passenger cabin exchanger, the passenger cabin exchanger receiving the liquid fluid heated by the condenser and the first circuit portion being configured to maintain the passenger cabin within a passenger cabin target temperature range.

Thus, the thermal management control circuit can also control the passenger cabin temperature and provides more comfort to the passengers.

According to one aspect, the power electronics component target temperature range is above the battery target temperature range.

According to one aspect, the power electronics component target temperature range is comprised between a low power electronics component temperature and a high power electronics component temperature and the battery target temperature range is comprised between a low battery temperature and a high battery temperature, the low power electronics component temperature being higher than the high battery temperature.

Thus, the power electronics component target temperature range and the battery target temperature range do not overlap.

According to one aspect, the first circuit portion comprises a radiator branch comprising a radiator configured to dissipate heat from the liquid fluid and a radiator branch control valve configured to control the liquid fluid entering in the radiator branch.

The radiator branch allows to dissipate heat in the liquid fluid carried in the first circuit portion, and thus participates to maintain the at least one power electronics component within the power electronics component target temperature range.

According to one aspect, the radiator branch control valve is a proportional valve.

According to one aspect, the first circuit portion comprises a radiator by-pass branch arranged parallel to the radiator branch, the radiator branch control valve being configured to control the radiator by-pass branch.

The by-pass branch allows controlling the flow of the liquid fluid flowing through the radiator branch, and thus the amount of liquid fluid cooled in the radiator branch. Thus, the temperature of the liquid fluid can be adapted so as to maintain the at least one power electronics component within the power electronics component target temperature range.

According to one aspect, the cooling-heating circuit comprises a second auxiliary communication circuit portion arranged between the second circuit portion and the first circuit portion and being configured to carry some liquid fluid from the second circuit portion to the first circuit portion.

The second auxiliary communication circuit portion is generally a back flow branch allowing returning an amount of liquid fluid from the second circuit portion to the first circuit portion for generally compensating the amount of liquid fluid brought by the first auxiliary communication circuit portion from the first circuit portion to the second circuit portion. First auxiliary communication circuit and second auxiliary communication circuit portion can also be used to adapt or compensate for small liquid volume changes that can occur in the following circumstances: when pump speed changes (transient modes), in the event of a possible small leak in one part of the circuit, depending on the volume of the liquid fluid in expansion tank(s) position(s).

According to one aspect, the first circuit portion further comprises an electric heater configured to heat the liquid fluid.

The electric heater allows speeding up the temperature ramp-up at cold start.

According to the invention, the first circuit portion comprises at least one first temperature sensor and the second circuit portion comprises at least one second temperature sensor.

The at least one first temperature sensor and the at least one second temperature sensor each allows closely monitoring the temperature of the liquid fluid carried in the first circuit portion, and respectively the temperature of the liquid fluid carried in the second circuit portion.

According to the invention, the thermal management control circuit further comprises a control unit coupled to the first temperature sensor and to the second temperature sensor, and configured to control at least the mixing valve.

The control unit allows closely controlling the temperature of the liquid fluid exiting the power electronics component and exiting the condenser and thus participates to maintain the power electronics component temperature within the power electronics component target temperature range. And, the control unit also allows closely controlling the temperature of the liquid fluid exiting the mixing valve and thus participates to maintain the battery temperature within the battery target temperature range.

According to one aspect, the thermal management control circuit comprises a further cooling loop carrying a further refrigerant and configured to cool the passenger cabin.

This cooling loop forms a conventional air conditioning feature allows cooling the ambient air in the passenger cabin, whenever hot exterior condition prevails.

In another aspect, it is proposed an electric automotive vehicle comprising:
- a drive motor,
- at least on power electronics component to supply the drive motor,
- a passenger cabin,
- a battery, and
- the thermal management control circuit according to the invention.

### Brief Description of Drawings

Other features, details and advantages will be shown in the following detailed description and on the figures, on which:
Figure 1 is a diagrammatical circuit layout of a thermal management control circuit according to the invention comprising a first circuit portion having at least one power electronics component and a second circuit portion having at least a battery ,
Figure 2 illustrates a first operating configuration example of the thermal management control circuit of the figure 1,
Figure 3 illustrates a second operating configuration example of the thermal management control circuit of the figure 1,
Figure 4 illustrates a third operating configuration example of the thermal management control circuit of the figure 1,
Figure 5 shows an example time chart showing the power electronics component temperature and the battery temperature over time,
Figure 6 shows an example of a functional diagram of a control unit controlling the thermal management control circuit.

### Description of Embodiments

In the figures, the same references denote identical or similar elements.

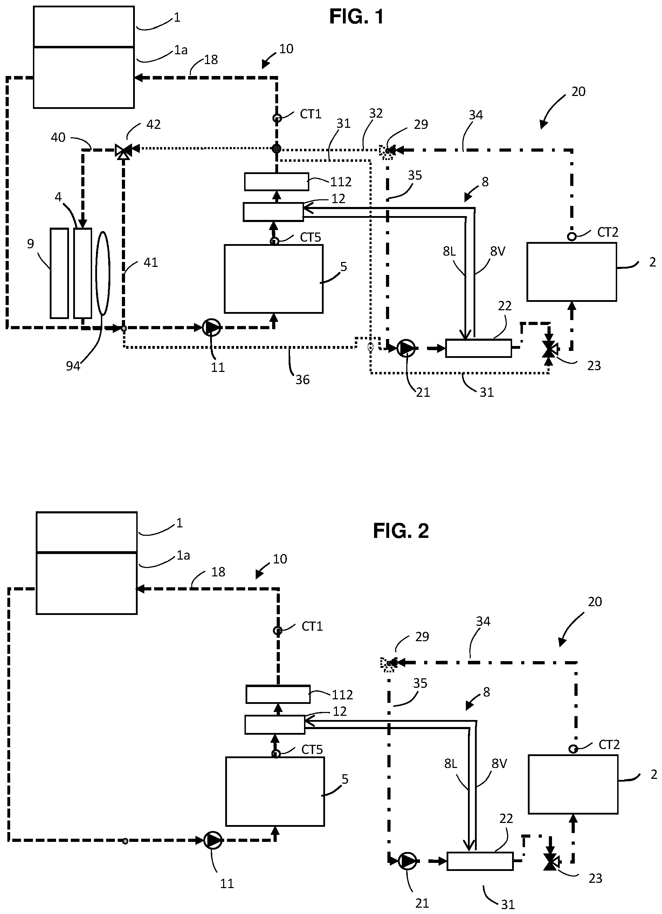

Figure 1 shows a thermal management control circuit. The thermal management control circuit is intended to be installed on an electric vehicle, such as a truck, a bus, a car or any other ground vehicle. In a preferred embodiment, the electric vehicle does not comprise any combustion engine. Nevertheless, it is not excluded that a combustion engine is provided for other functions than the propulsion of the vehicle.

Classically, an electric vehicle comprises a drive motor, at least one power electronics component 5 to supply the drive motor, a passenger cabin 1 and a battery 2. The power electronics component 5 can include one or more high-power output transistor or thyristors with their associated control circuits.

The thermal management control circuit allows controlling the at least one electronics component temperature, the battery temperature and the passenger cabin temperature.

The thermal management control circuit comprises a heat pump loop 8. The heat pump loop 8 comprises a condenser 12, an expansion valve, an evaporator 22, and a compressor (not shown).

A refrigerant flows in the heat pump loop 8. Before entering in the compressor, the refrigerant is warm and in a low pressurized gaseous state. The refrigerant then enters in the compressor and is pressurized by the compressor. The refrigerant exits the compressor hot and in a high pressurized gaseous state. Then it enters in the condenser 12 and condenses, releasing heat. The refrigerant is then cold and in a high pressurized liquid state. The refrigerant then enters in the expansion valve and is depressurized by the expansion valve. The refrigerant exits the expansion valve colder and in a low pressurized liquid state. Then it enters in the evaporator 22 and evaporates, absorbing heat. The refrigerant is then warm and in a low pressurized gaseous state and it can enter again in the compressor.

The condenser 12 and the evaporator 22 are fluidically coupled by a vapor line 8V passing through the compressor, and by a liquid line 8L passing through the expansion valve.

The refrigerant is a fluid conventionally used in the automotive vehicle and adapted to the operating temperature and to the pressure of the heat pump loop 8. For example, the refrigerant can be 1,1,1,2-Tetrafluoroethane also known as R-134a.

The thermal management control circuit further comprises a cooling-heating circuit. The cooling-heating circuit is configured to carry a single liquid fluid. The liquid fluid can be water with an additive so as the liquid remains liquid at temperature below 0°C. For example, additives can be antifreeze or a solution of an organic chemical such as ethylene glycol, diethylene glycol, or propylene glycol.

The cooling-heating circuit comprises a first circuit portion 10 and a second circuit portion 20. The first circuit portion 10 and the second circuit portion 20 are fluidly connected through a first auxiliary communication circuit portion 31 arranged between the first circuit portion 10 and the second circuit portion 20, through a second auxiliary communication circuit portion 32 arranged between the second circuit portion 20 and the first circuit portion 10 and through a third auxiliary communication circuit portion 36 arranged between the first circuit portion 10 and the second circuit portion 20.

The first auxiliary communication circuit portion 31 can carry liquid fluid from the first circuit portion 10 to the second circuit portion 20. The second auxiliary communication circuit portion 32 can carry liquid fluid from the second circuit portion 20 to the first circuit portion 10. And, the third auxiliary communication circuit portion 36 can carry liquid fluid form the first circuit portion 10 to the second circuit portion 20.

Advantageously, auxiliary communication circuit portions also ensure proper liquid supply to circulating pumps and prevent any pump cavitation.

A single non-represented expansion tank is provided in the first circuit portion 10 or in the second circuit portion 20. The expansion tank accepts excess liquid fluid following changes in fluid temperature.

The first circuit portion 10 comprises a first pump 11 to circulate the liquid fluid in the cooling-heating circuit. The first circuit portion 10 also comprises the condenser 12 of the heat pump loop 8. The condenser 12 allows heating the liquid fluid. As previously described, when the compressor of the heat pump loop runs, the refrigerant of the heat pump loop 8 flows in the condenser, the refrigerant condenses therein, releasing heat. This released heat heats the liquid fluid. In other word, the condenser 12 is used as a heat supplier to the liquid fluid in the first circuit portion 10.

The first circuit portion 10 can optionally comprise a selectively controlled electric heater 112 to heat the liquid fluid. The electric heater 112 is disposed in a series arrangement with the condenser. The electric heater 112 allows speeding up the temperature ramp-up of the liquid fluid in the first circuit portion 10 at cold start.

The first circuit portion 10 also comprises the power electronics component 5. The power electronics component 5 are disposed upstream of the condenser 12. The liquid fluid carried in the first circuit portion 10 passes through the power electronics component 5, and then encounters the condenser and is heated by the condenser 12. The first circuit portion 10 allows maintaining the power electronics components within a power electronics component temperature range TR1.

Some liquid fluid from the first circuit portion 10 heated by the condenser 12 is carried by the first auxiliary communication circuit portion 31 to the second circuit portion 20.

The first circuit portion 10 further comprises a passenger cabin exchanger 1a. The passenger cabin exchanger 1a is disposed downstream the condenser 12 and receives the liquid fluid heated by the condenser 12. The passenger cabin exchanger 1a takes heat from the liquid fluid and releases the captured heat in the passenger cabin 1. The first circuit portion 10 can thus control the passenger cabin temperature and provides more comfort to the passengers. Once the liquid fluid has passed through the passenger cabin exchanger 1a, the liquid fluid is sent back to the first pump inlet, and further to the power electronics component 5. The first circuit portion 10 allows maintaining the passenger cabin within a passenger cabin target temperature range.

The first circuit portion 10 further comprises a radiator branch 40 and a radiator branch control valve 42. The radiator branch 40 is disposed parallel to the condenser 12 and the power electronics component 5. The radiator branch 40 comprises a radiator 4 to dissipate heat from the liquid fluid. The radiator branch 40 can additionally comprise a fan 94. The fan 94 realizes a forced convection and participates to dissipate heat from the radiator 4. The radiator 4 can therefore dissipate more heat from the liquid fluid. The radiator branch control valve 42 controls the liquid fluid entering in the radiator branch 40. It controls the amount of liquid fluid entering in the radiator branch 40. The radiator branch control valve 42 is a proportional valve.

The first circuit portion 10 further comprises a radiator by-pass branch 41 arranged parallel to the radiator branch 40. The radiator by-pass branch 41 allows the liquid fluid to by-pass the radiator 4 in the radiator branch 40. The radiator branch control valve 42 controls the radiator by-pass branch 41. It controls the amount of liquid fluid entering in the radiator by-pass branch 41. The temperature of the liquid fluid carried in the first circuit portion 10 can thus be adapted, which contributes to maintain the at least one power electronics component 5 within the power electronics component target temperature range TR1.

Some liquid fluid from the first circuit portion 10 coming from the passenger cabin exchanger 1a, the radiator branch 40 and the by-pass branch 41 is carried by the third auxiliary communication circuit portion 36 to the second circuit portion 20.

The first circuit portion 10 further comprises a first temperature sensor CT1 measuring the temperature of the liquid fluid entering in the passenger cabin exchanger 1a and a first temperature sensor CT5 measuring the temperature of the liquid fluid exiting the power electronics component 5.

The second circuit portion 20 comprises a second pump 21 to circulate the liquid fluid in the cooling-heating circuit. The second circuit portion 20 also comprises the evaporator 22. The evaporator 22 allows cooling the liquid fluid. As previously described, when the compressor of the heat pump loop runs, the refrigerant of the heat pump loop 8 flows in the evaporator 22, the refrigerant evaporates therein, absorbing heat. This absorbing heat is absorbed to the liquid fluid, cooling the liquid fluid. In other word, the evaporator 22 is used as a cold supplier to the liquid fluid.

The second circuit portion 20 comprises a mixing valve 23 arranged between the evaporator and the battery 2. The mixing valve 23 selectively mix some liquid fluid cooled by the evaporator 22 and some liquid fluid heated by the condenser 12 coming from the first auxiliary communication circuit portion 31.

The mixing valve 23 has a first entry port to let in some liquid fluid cooled by the evaporator, a second entry port to let in the liquid fluid carried by the first auxiliary communication circuit portion 31 and an exit port to carry the liquid fluid to the battery 2.

The mixing valve 23 allows mixing specific proportions of cooled liquid fluid and heated liquid fluid and delivering the liquid fluid at a temperature resulting from the mixing proportions to the battery 2. The mixing valve 23 therefore allows maintaining the battery 2 within a battery target temperature range TR2.

The second circuit portion 20 comprises a return branch 34, 35 returning the liquid fluid exiting from the battery 2 to the second pump inlet and further to the evaporator 22.

Some liquid fluid from the return branch 34, 35 is carried by the second auxiliary communication circuit portion 32 to the first circuit portion 10. The second auxiliary communication circuit portion 32 brings the liquid fluid to the radiator branch control valve 42.

The second auxiliary communication circuit portion 32 and the return branch 34, 35 can optionally be connected through a control valve 29. The control valve 29 could be a proportional valve. When no control valve 29 is present, a simple T coupler is used instead.

The second circuit portion 20 comprises a second temperature sensor CT2 measuring the temperature of the liquid fluid exiting the battery 2.

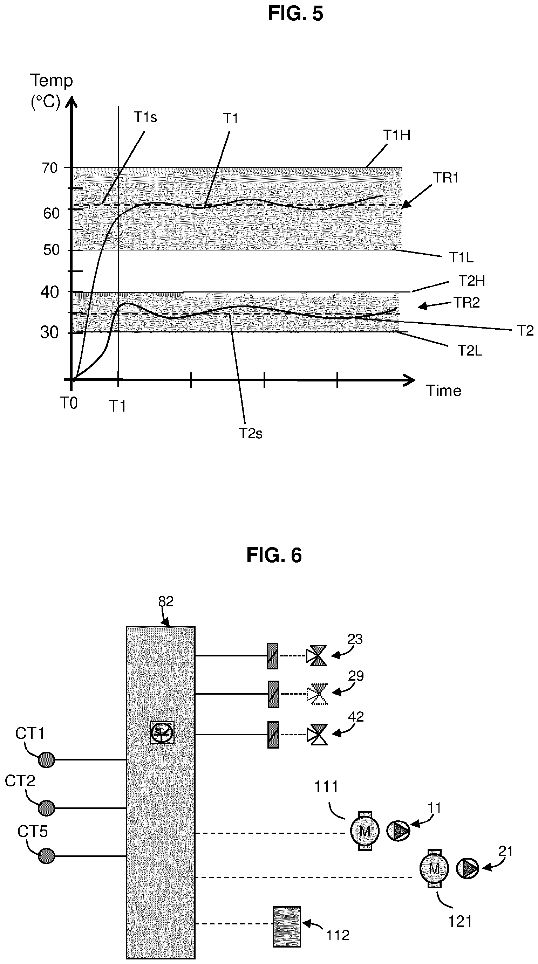

As shown on figure 6, the thermal management control circuit comprises a control unit 82 coupled to the first temperature sensors CT1, CT5 and to the second temperature sensor CT2. Depending on the temperatures sensed by the first temperature sensors CT1, CT5 and from the second temperature sensor CT2, the control unit 82 controls the mixing valve 23 and the radiator branch control valve 42. It allows closely controlling the temperature of the liquid fluid exiting the power electronics component 5 and exiting the condenser 12 and thus participates to maintain the power electronics component temperature within the power electronics component target temperature range TR1. And, it allows closely controlling the temperature of the liquid fluid exiting the mixing valve 23 and thus participates to maintain the battery temperature within the battery target temperature range TR2 adapting the temperature of liquid fluid carried to the battery 2.

The control unit 82 also controls the radiator branch control valve 42. It allows adapting the amount of liquid fluid circulating in the radiator branch 40 and circulating in the by-pass branch 41.

When the thermal management control circuit comprises the control valve 29, the control unit 82 also controls the control valve 29 to adapt the amount of liquid fluid circulating in the second auxiliary communication circuit portion 32 and in the return branch 35.

The control unit 82 also controls a first pump motor 111 and a second pump motor 121 to activate respectively the first pump 11 and the second pump 21. The first pump 11 and the second pump 21 are controllable in speed. Thus, the flow rate of the liquid fluid can be controlled depending on the need to regulate its temperature.

The control unit 82 also controls the electric heater 112. The control unit 82 can switch on and switch off the electric heater 112 depending on the need to heat the liquid fluid in the first circuit portion 10.

The thermal management control circuit may comprise a further cooling loop carrying a further refrigerant, i.e. a conventional air conditioning loop. This further cooling loop cools the passenger cabin 1. The further cooling loop comprises a further condenser 9 disposed in the radiator branch 40, near the radiator 4. A blowing fan 94 can participate to dissipate heat from the further condenser 9.

As shown on figure 5, the power electronics component target temperature range TR1 is comprised between a low power electronics component temperature T1L and a high power electronics component temperature T1H and the battery target temperature range TR2 is comprised between a low battery temperature T2L and a high battery temperature T2H. In the illustrated example, the low power electronics component temperature T1L is equal to 50°C and the high power electronics component temperature T1H is equal to 70°C. And, the low battery temperature T2L is equal to 30°C and the high battery temperature T2H is equal to 40°C. The low power electronics component temperature T1L is higher than the high battery temperature T2H. The power electronics component target temperature range TR1 is thus above the battery target temperature range TR2.

In one embodiment, the two temperature ranges TR1, TR2 do not overlap. In another embodiment, the two temperature ranges TR1,TR2 might overlap.

When the thermal management control circuit starts at a time T0, the power electronics component temperature T1 and the battery temperatureT2 increase until they reach respectively the power electronics component target temperature range TR1 and the battery target temperature range TR2. At the time T1, the power electronics component temperature T1 and the battery temperature T2 have reached respectively the power electronics component target temperature range TR1 and the battery target temperature range TR2. Then, the power electronics component temperature T1 remains between the low power electronics component temperature T1L and the high power electronics component temperature T1H. And, the battery temperature T2 remains between the low battery temperature T2L and the high battery temperature T2H.

In one embodiment, there may be provided a power electronics component temperature target setpoint T1s and a battery temperature target setpoint T2s, for the close loop control carried out by the control unit 82. The power electronics component temperature target setpoint T1s and the battery temperature target setpoint T2s can be adaptive parameters.

The power electronics component target temperature range TR1 can be defined from the power electronics component temperature target setpoint T1s, as being equal to the power electronics component temperature target setpoint T1s more or less 10°C. The battery target temperature range TR2 can be defined from the battery temperature target setpoint T2s, as being equal to the battery temperature target setpoint T2s more or less 10°C.

As the first pump 11 and the second pump 21 are controllable in speed, the flow rate of the liquid fluid can be reduced or even stopped if the power electronics component temperature T1 is substantially equal to the power electronics component temperature target setpoint T1s and if the battery temperature T2 is substantially equal to the battery temperature target setpoint T2s. And, the flow rate of the liquid fluid can be sped up when the power electronics component temperature T1 deviates from the power electronics component temperature target setpoint T1s and the battery temperature T2 deviates from the battery temperature target setpoint T2s.

Different operating modes of the circuit will now be described with reference to Figures 2 to 4.

Figure 2 represents a temporary operating mode where the liquid fluid carried in the first circuit portion 10 only needs to be heated by the condenser 12 or eventually only by the condenser 12 and the electric heater 112, to reach and/or be maintained within the passenger cabin target temperature range when flowing through the passenger cabin exchanger 1a and within the power electronics component target temperature range TR1 when flowing through the power electronics component 5. And, the liquid fluid carried in the second circuit portion 20 only needs to be cooled by the evaporator 22 to be maintained within the battery target temperature range when flowing through the battery 2.

The second entry port of the mixing valve 23 is closed. No liquid fluid from the first circuit portion 10 is carried by the first auxiliary communication circuit portion 31 to the second circuit portion 20.

And, no liquid fluid from the second circuit portion 20 is carried by the second auxiliary communication circuit portion 34, 32 to the first circuit portion 10. And, no liquid fluid from the first circuit portion 10 is carried by the third auxiliary communication circuit portion 36 to the second circuit portion 20.

In the first circuit portion 10, the liquid fluid flows through the power electronics component 5 and then through the condenser 12. Then, the liquid fluid heated by the condenser 12 enters in the passenger cabin exchanger 1a, and allows maintaining the passenger cabin 1 within the passenger cabin target temperature range. The liquid fluid is then sent back to the power electronics component 5.

The temperature of the liquid fluid flowing through the power electronics component 5 is within the power electronics component target temperature range TR1. In other words, if the power electronics component temperature is above the temperature of the liquid fluid, the power electronic component is cooled by the liquid fluid and the liquid fluid retrieved the dissipated heat from the power electronics component. And, if the power electronics component temperature is below the temperature of the liquid fluid, the power electronics component is heated by the liquid fluid.

Optionally, the electric heater 112 can be activated to heat the liquid fluid. For example, if the vehicle starts and the temperature of the liquid fluid heated by the condenser 12 is not high enough.

In the second circuit portion 20, the liquid fluid is cooled by the evaporator 22, and then flows to the battery 2, maintaining the battery temperature within the battery target temperature range TR2. The liquid fluid exiting the battery 2 is sent back directly to the evaporator 22 via the return branch 34, 35.

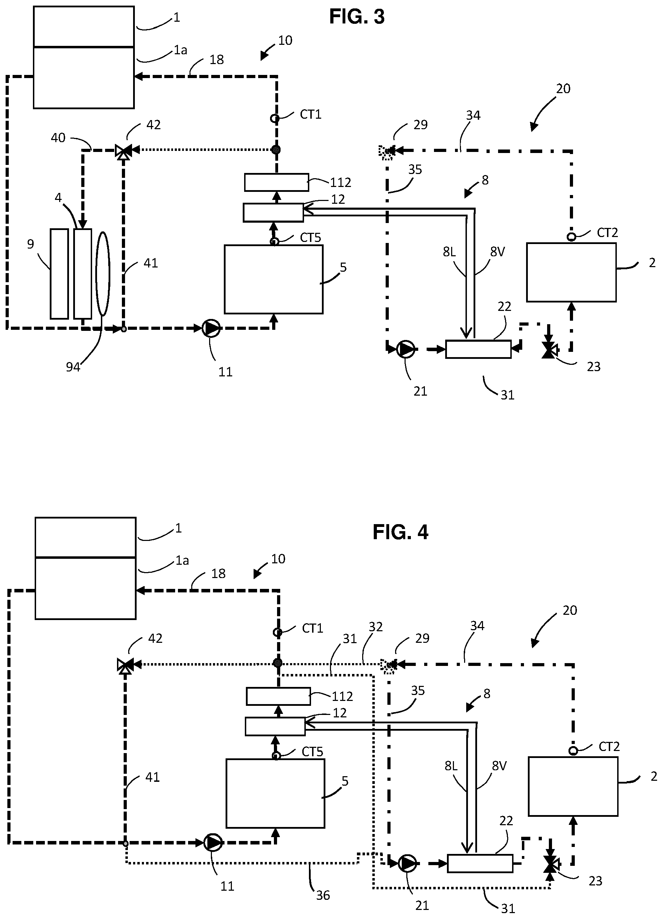

Figure 3 represents an operating mode where the liquid fluid carried in the first circuit portion 10 needs both to be heated by the condenser 12, or eventually by the condenser 12 and the electric heater 112, and to be cooled by the radiator 4, to be maintained within the passenger cabin target temperature range when flowing through the passenger cabin exchanger 1a and within the power electronics component target temperature range TR1 when flowing through the power electronics component 5. And, the liquid fluid carried in the second circuit portion 20 only needs to be cooled by the evaporator 22 to be maintained within the battery target temperature range when flowing through the battery 2.

The second entry port of the mixing valve 23 is closed. No liquid fluid from the first circuit portion 10 is carried by the first auxiliary communication circuit portion 31 to the second circuit portion 20.

And, no liquid fluid from the second circuit portion 20 is carried by the second auxiliary communication circuit portion 34, 32 to the first circuit portion 10. And, no liquid fluid from the first circuit portion 10 is carried by the third auxiliary communication circuit portion 36 to the second circuit portion 20.

Contrary to the operating mode represented on figure 2, in the first circuit portion 10, some liquid fluid heated by the condenser 12 enters the radiator branch control valve 42, flows in the radiator branch 40 and through the radiator 4 and is cooled. It allows regulating the temperature of the liquid fluid carried in the first circuit portion10. Optionally, some liquid fluid heated by the condenser 12 could also flow in the by-pass branch 41 depending on the amount of liquid fluid needed to be cooled by the radiator 4. The radiator branch control valve 42 controls the amount of liquid fluid flowing in the radiator branch 40 and in the by-pass branch 41.

Thus, a part of the liquid fluid heated by the condenser 12 flows in the radiator branch 40 to be cooled, optionally a part flows in the by-pass branch 41 and a part flows through the passenger cabin exchanger 1a to maintain the passenger cabin 1 within the passenger cabin target temperature range. The liquid fluid then returns to the power electronics component 5 at a temperature within the power electronics component target temperature range.

In the second circuit portion 20, as for the operating mode represented on figure 2, the liquid fluid is cooled by the evaporator 22, and then flows to the battery 2, maintaining the battery temperature within the battery target temperature range. The liquid fluid existing the battery 2 is sent back directly to the evaporator 22 via the return branch 34, 35.

Figure 4 represents an operating mode where the liquid fluid cooled by the evaporator 22 in the second circuit portion 20 is too cold to maintain the battery temperature within the battery target temperature range. Liquid fluid heated by the condenser 12 in the first circuit portion 10 is therefore carried by the first auxiliary communication circuit 31 to the second circuit portion 20.

The first entry port of the mixing valve 23 let in some liquid fluid cooled by the evaporator 22 and the second entry port of the mixing valve 23 let in some liquid fluid heated by the condenser 12 carried by the first auxiliary communication circuit portion 31. The liquid fluid exiting the mixing valve 23 has a temperature resulting of the mixing of the cooled liquid fluid and of the heated liquid fluid, and flows through the battery 2. It allows maintaining the battery temperature within the battery target temperature range TR2. The liquid fluid then returns to the evaporator 22 through the return branch 34, 35.

While a part of the liquid fluid coming from the first circuit portion 10 enters in the second circuit portion 20 through the first auxiliary communication circuit portion 31, a part of the liquid fluid coming from the second circuit portion 20 enters in the first circuit portion 10 through the second auxiliary communication circuit portion 32. And, to guarantee a proper circulating of the liquid fluid in the thermal management control circuit, a part of the liquid fluid coming from the first circuit portion 10 enters in the second circuit portion 20 through the third auxiliary communication circuit portion 36. This third auxiliary communication portion 36 guarantees to feed the second pump 21 and avoid cavitations in the second pump 21.

The amount of liquid fluid carried by the first auxiliary communication circuit portion 31 and by the third auxiliary communication circuit portion 36 from the first circuit portion 10 to the second circuit portion 20 is equivalent to the amount of liquid fluid carried by the second auxiliary communication circuit portion 32 from the second circuit portion 20 to the first circuit portion 10.

The liquid fluid coming from the second circuit portion 20 and entering in the first circuit portion 10 through the second auxiliary communication portion 32 flows then through the radiator branch control valve 42 and depending on the position of the radiator control valve 42, the liquid fluid can then flow in the radiator by-pass branch 41 as shown in figure 4, or in the radiator branch 40 (not shown), or both as shown in figure 1. In the first circuit portion 10, the liquid fluid flows through the power electronics component 5, through the condenser 12 and through the passenger cabin exchanger 1a.

And, some liquid fluid heated by the condenser 12 can flow through the radiator branch control valve 42. Depending on the position of the radiator control valve 42 and the temperature regulation needed, the liquid fluid can flow in the radiator branch 40 (not shown) or in the by-pass branch 41 as shown on figure 4 or both as shown on figure 1.

Figure 1 exhibits a full possibilities configuration of the thermal management control circuit when the mixing valve 23, the optionally control valve 29 and the radiator branch control valve 42 are in an intermediate position. Depending on the position of the mixing valve 23, the radiator branch control valve 42 and the optionally control valve 29, the thermal management control circuit can present different operating modes. The flow of the liquid fluid is controlled by the mixing valve 23, the radiator branch control valve 42 and the optionally control valve 29.

## Claims

1. A thermal management control circuit for an electric vehicle having a drive motor, at least one power electronics component (5) to supply the drive motor, a passenger cabin (1a) and a battery (2), the thermal management control circuit comprising:
- a heat pump loop (8) comprising a refrigerant and having a condenser (12) and an evaporator (22), a vapor line (8V) and a liquid line (8L) for fluidically coupling the condenser (12) and the evaporator (22),
- a cooling-heating circuit configured to carry a single liquid fluid and comprising
- a first circuit portion (10) comprising a first pump (11) configured to circulate the liquid fluid in the cooling-heating circuit, the condenser (12) configured to heat the liquid fluid, and the power electronics component (5), the first circuit portion (10) being configured to maintain the at least one power electronics component (5) within a power electronics component target temperature range (TR1),
- a second circuit portion (20) comprising a second pump (21) configured to circulate the liquid fluid in the cooling-heating circuit, and the evaporator (22) configured to cool the liquid fluid,
- a first auxiliary communication circuit portion (31) arranged between the first circuit portion (10) and the second circuit portion (20) and being configured to carry some liquid fluid heated by the condenser (12) from the first circuit portion (10) to the second circuit portion (20),
the first auxiliary communication circuit portion (31) and the second circuit portion (20) cooperating to maintain the battery (2) within a battery target temperature range (TR2), the battery target temperature range being different from the power electronics component target temperature range,
**characterized in that**
the second circuit portion comprises a mixing valve (23) configured to selectively mix some liquid fluid cooled by the evaporator (22) and some liquid fluid heated by the condenser (12) coming from the first auxiliary communication circuit portion (31), thereby allowing to maintain the battery (2) within the battery target temperature range,
and **in that** the mixing valve (23) is arranged between the evaporator (22) and the battery (2) and has a first entry port configured to let in some liquid fluid cooled by the evaporator (22) and a second entry port configured to let in the liquid fluid carried by the first auxiliary communication circuit portion (31) and an exit port configured to carry the liquid fluid to the battery (2),
wherein the first circuit portion (10) comprises at least one first temperature sensor (CT1, CT5) and the second circuit portion (20) comprises at least one second temperature sensor (CT2),
further comprising a control unit (82) coupled to the first temperature sensor (CT1, CT5) and to the second temperature sensor (CT2) and configured to control at least the mixing valve (23).

2. The thermal management control circuit according to claim 1, wherein the first circuit portion (10) further comprises a passenger cabin exchanger (1a), the passenger cabin exchanger (1a) receiving the liquid fluid heated by the condenser (12) and the first circuit portion (10) being configured to maintain the passenger cabin (1) within a passenger cabin target temperature range.

3. The thermal management control circuit according to claim 1 or 2, wherein the power electronics component target temperature range (TR1) is above the battery target temperature range (TR2).

4. The thermal management control circuit according to any one of claims 1 to 3, wherein the first circuit portion (10) comprises a radiator branch (40) comprising a radiator (4) configured to dissipate heat from the liquid fluid and a radiator branch control valve (42) configured to control the liquid fluid entering in the radiator branch (40).

5. The thermal management control circuit according to claim 4, wherein the first circuit portion (10) comprises a radiator by-pass branch (41) arranged parallel to the radiator branch (40), the radiator branch control valve (42) being configured to control the radiator by-pass branch (41).

6. The thermal management control circuit according to any one of claims 1 to 5, wherein the cooling-heating circuit comprises a second auxiliary communication circuit portion (32) arranged between the second circuit portion (20) and the first circuit portion (10) and being configured to carry some liquid fluid from the second circuit portion (20) to the first circuit portion (10).

7. The thermal management control circuit according to any one of claims 1 to 6, wherein the first circuit portion (10) further comprises an electric heater (112) configured to heat the liquid fluid.

8. The thermal management control circuit according to any one of claims 1 to 7, comprising a further cooling loop carrying a further refrigerant and configured to cool the passenger cabin.

9. An electric automotive vehicle comprising:
- a drive motor,
- at least one power electronics component to supply the drive motor,
- a passenger cabin (1),
- a battery (2), and
- the thermal management control circuit according to any one of claims 1 to 8.

## Patentansprüche

1. Wärmemanagement-Steuerschaltung für ein Elektrofahrzeug, das einen Antriebsmotor, mindestens eine Leistungselektronikkomponente (5) zum Versorgen des Antriebsmotors, eine Fahrgastzelle (1a) und eine Batterie (2) aufweist, wobei die Wärmemanagement-Steuerschaltung umfassend:
- eine Wärmepumpenschleife (8), umfassend ein Kältemittel, und der einen Kondensator (12) und einen Verdampfer (22), eine Dampfleitung (8V) und eine Flüssigkeitsleitung (8L) zum fluidischen Koppeln des Kondensators (12) und des Verdampfers (22) aufweist,
- einen Kühl-/Heizkreislauf, der konfiguriert ist, um ein einziges flüssiges Fluid zu leiten, und umfassend
- einen ersten Kreislaufabschnitt (10), umfassend eine erste Pumpe (11), die konfiguriert ist, um das flüssige Fluid in dem Kühl-/Heizkreislauf zirkulieren zu lassen, den Kondensator (12), der konfiguriert ist, um das flüssige Fluid zu erwärmen, und die Leistungselektronikkomponente (5), wobei der erste Kreislaufabschnitt (10) konfiguriert ist, um die mindestens eine Leistungselektronikkomponente (5) innerhalb eines Leistungselektronikkomponenten-Solltemperaturbereichs (TR1) zu halten,
- einen zweiten Kreislaufabschnitt (20), umfassend eine zweite Pumpe (21), die konfiguriert ist, um das flüssige Fluid in dem Kühl-Heiz-Kreislauf zirkulieren zu lassen, und den Verdampfer (22), der konfiguriert ist, um das flüssige Fluid zu kühlen,
- einen ersten Hilfskreislaufabschnitt (31), der zwischen dem ersten Kreislaufabschnitt (10) und dem zweiten Kreislaufabschnitt (20) angeordnet und konfiguriert ist, um ein durch den Kondensator (12) erwärmtes flüssiges Fluid von dem ersten Kreislaufabschnitt (10) zu dem zweiten Kreislaufabschnitt (20) zu leiten,
wobei der erste Hilfskreislaufabschnitt (31) und der zweite Kreislaufabschnitt (20) zusammenwirken, um die Batterie (2) innerhalb eines Batterie-Solltemperaturbereichs (TR2) zu halten, wobei sich der Batterie-Solltemperaturbereich von dem Leistungselektronikkomponenten-Solltemperaturbereich unterscheidet,
**dadurch gekennzeichnet, dass**
der zweite Kreislaufabschnitt ein Mischventil (23) umfasst, das konfiguriert ist, um selektiv einen Teil des durch den Verdampfer (22) gekühlten flüssigen Fluids und einen Teil des durch den Kondensator (12) erwärmten flüssigen Fluids, das aus dem ersten Hilfskreislaufabschnitt (31) kommt, zu mischen, was ermöglicht, die Batterie (2) innerhalb des Batterie-Solltemperaturbereichs zu halten,
und dass
das Mischventil (23) zwischen dem Verdampfer (22) und der Batterie (2) angeordnet ist und eine erste Eingangsöffnung, die konfiguriert ist, um etwas von dem Verdampfer (22) gekühltes flüssiges Fluid einzulassen, und eine zweite Eingangsöffnung, die konfiguriert ist, um das flüssige Fluid einzulassen, das von dem ersten Hilfskreislaufabschnitt (31) geleitet wird, und eine Ausgangsöffnung, die konfiguriert ist, um das flüssige Fluid zu der Batterie (2) zu leiten, aufweist,
wobei der erste Kreislaufabschnitt (10) mindestens einen ersten Temperatursensor (CT1, CT5) umfasst und der zweite Kreislaufabschnitt (20) mindestens einen zweiten Temperatursensor (CT2) umfasst,
ferner umfassend eine Steuereinheit (82), die mit dem ersten Temperatursensor (CT1, CT5) und dem zweiten Temperatursensor (CT2) gekoppelt und konfiguriert ist, um zumindest das Mischventil (23) zu steuern.

2. Wärmemanagement-Steuerschaltung nach Anspruch 1, wobei der erste Kreislaufabschnitt (10) ferner einen Fahrgastkabinentauscher (1a) umfasst, wobei der Fahrgastkabinentauscher (1a) das von dem Kondensator (12) erwärmte flüssige Fluid aufnimmt und der erste Kreislaufabschnitt (10) konfiguriert ist, um die Fahrgastkabine (1) innerhalb eines Fahrgastkabinen-Solltemperaturbereichs zu halten.

3. Wärmemanagement-Steuerschaltung nach Anspruch 1 oder 2, wobei der Leistungselektronikkomponenten-Solltemperaturbereich (TR1) über dem Batterie-Solltemperaturbereich (TR2) ist.

4. Wärmemanagement-Steuerschaltung nach einem der Ansprüche 1 bis 3, wobei der erste Kreislaufabschnitt (10) einen Heizkörperzweig (40) umfasst, umfassend einen Heizkörper (4), der konfiguriert ist, um Wärme von dem flüssigen Fluid abzuleiten, und ein Heizkörperzweig-Steuerventil (42), das konfiguriert ist, um das in den Heizkörperzweig (40) eintretende flüssige Fluid zu steuern.

5. Wärmemanagement-Steuerschaltung nach Anspruch 4, wobei der erste Kreislaufabschnitt (10) einen Heizkörper-Bypasszweig (41) umfasst, der parallel zu dem Heizkörperzweig (40) angeordnet ist, wobei das Heizkörperzweig-Steuerventil (42) konfiguriert ist, um den Heizkörper-Bypasszweig (41) zu steuern.

6. Wärmemanagement-Steuerschaltung nach einem der Ansprüche 1 bis 5, wobei die Kühl-/Heizkreislauf einen zweiten Hilfskreislaufabschnitt (32) umfasst, der zwischen dem zweiten Kreislaufabschnitt (20) und dem ersten Kreislaufabschnitt (10) angeordnet und konfiguriert ist, um ein flüssiges Fluid von dem zweiten Kreislaufabschnitt (20) zu dem ersten Kreislaufabschnitt (10) zu leiten.

7. Wärmemanagement-Steuerschaltung nach einem der Ansprüche 1 bis 6, wobei der erste Kreislaufabschnitt (10) ferner eine elektrische Heizung (112) umfasst, die konfiguriert ist, um das flüssige Fluid zu erwärmen.

8. Wärmemanagement-Steuerschaltung nach einem der Ansprüche 1 bis 7, umfassend einen weiteren Kühlkreislauf, der ein weiteres Kältemittel leitet und konfiguriert ist, um die Fahrgastzelle zu kühlen.

9. Elektrisches Kraftfahrzeug, umfassend:
- einen Antriebsmotor,
- mindestens eine Leistungselektronikomponente zum Versorgen des Antriebsmotors,
- eine Fahrgastzelle (1),
- eine Batterie (2); und
- die Wärmemanagement-Steuerschaltung nach einem der Ansprüche 1 bis 8.

## Revendications

1. Circuit de commande de gestion thermique pour un véhicule électrique comportant un moteur d'entraînement, au moins un composant électronique de puissance (5) pour alimenter le moteur d'entraînement, un habitacle (1a) et une batterie (2), le circuit de commande de gestion thermique comprenant :
- une boucle de pompe à chaleur (8) comprenant un réfrigérant et ayant un condenseur (12) et un évaporateur (22), une conduite de vapeur (8V) et une conduite de liquide (8L) pour relier fluidiquement le condenseur (12) et l'évaporateur (22),
- un circuit de refroidissement et de chauffage configuré pour transporter un seul fluide liquide et comprenant
- une première partie de circuit (10) comprenant une première pompe (11) configurée pour faire circuler le fluide liquide dans le circuit de refroidissement et de chauffage, le condenseur (12) configuré pour chauffer le fluide liquide, et le composant électronique de puissance (5), la première partie de circuit (10) étant configurée pour maintenir l'au moins un composant électronique de puissance (5) dans une plage de température cible du composant électronique de puissance (TR1),
- une deuxième partie de circuit (20) comprenant une deuxième pompe (21) configurée pour faire circuler le fluide liquide dans le circuit de refroidissement et de chauffage, et l'évaporateur (22) configuré pour refroidir le fluide liquide,
- une première partie de circuit de communication auxiliaire (31) disposée entre la première partie de circuit (10) et la deuxième partie de circuit (20) et configurée pour transporter un fluide liquide chauffé par le condenseur (12) de la première partie de circuit (10) à la deuxième partie de circuit (20),
la première partie du circuit de communication auxiliaire (31) et la deuxième partie du circuit (20) coopérant pour maintenir la batterie (2) dans une plage de température cible de la batterie (TR2), la plage de température cible de la batterie étant différente de la plage de température cible du composant électronique de puissance,
**caractérisé en ce que**
la deuxième partie du circuit comprend une vanne de mélange (23) configurée pour mélanger sélectivement une partie du fluide liquide refroidi par l'évaporateur (22) et une partie du fluide liquide chauffé par le condenseur (12) provenant de la première partie du circuit de communication auxiliaire (31), ce qui permet de maintenir la batterie (2) dans la plage de température cible de la batterie,
et **en ce que**
la vanne de mélange (23) est disposée entre l'évaporateur (22) et la batterie (2) et possède un premier orifice d'entrée configuré pour laisser entrer du fluide liquide refroidi par l'évaporateur (22) et un second orifice d'entrée configuré pour laisser entrer le fluide liquide transporté par la première partie du circuit de communication auxiliaire (31) et un orifice de sortie configuré pour acheminer le fluide liquide vers la batterie (2),
dans lequel la première partie du circuit (10) comprend au moins un premier capteur de température (CT1, CT5) et la deuxième partie du circuit (20) comprend au moins un deuxième capteur de température (CT2),
comprenant en outre une unité de commande (82) couplée au premier capteur de température (CT1, CT5) et au second capteur de température (CT2) et configurée pour commander au moins la vanne de mélange (23).

2. Circuit de commande de gestion thermique selon la revendication 1, dans lequel la première partie du circuit (10) comprend en outre un échangeur d'habitacle (1a), l'échangeur d'habitacle (1a) recevant le fluide liquide chauffé par le condenseur (12) et la première partie du circuit (10) étant configurée pour maintenir l'habitacle (1) dans une plage de température cible de l'habitacle.

3. Circuit de commande de gestion thermique selon la revendication 1 ou 2, dans lequel la plage de température cible du composant électronique de puissance (TR1) est supérieure à la plage de température cible de la batterie (TR2).

4. Circuit de commande de gestion thermique selon l'une quelconque des revendications 1 à 3, dans lequel la première partie du circuit (10) comprend une branche de radiateur (40) comprenant un radiateur (4) configuré pour dissiper la chaleur du fluide liquide et une vanne de commande de la branche de radiateur (42) configurée pour contrôler le fluide liquide entrant dans la branche de radiateur (40).

5. Circuit de commande de gestion thermique selon la revendication 4, dans lequel la première partie du circuit (10) comprend une branche de dérivation du radiateur (41) disposée parallèlement à la branche du radiateur (40), la vanne de commande de la branche du radiateur (42) étant configurée pour commander la branche de dérivation du radiateur (41).

6. Circuit de commande de gestion thermique selon l'une quelconque des revendications 1 à 5, dans lequel le circuit de refroidissement et de chauffage comprend une deuxième partie de circuit de communication auxiliaire (32) disposée entre la deuxième partie de circuit (20) et la première partie de circuit (10) et configurée pour transporter du fluide liquide de la deuxième partie de circuit (20) à la première partie de circuit (10).

7. Circuit de commande de gestion thermique selon l'une quelconque des revendications 1 à 6, dans lequel la première partie du circuit (10) comprend en outre un réchauffeur électrique (112) configuré pour chauffer le fluide liquide.

8. Circuit de commande de gestion thermique selon l'une quelconque des revendications 1 à 7, comprenant une autre boucle de refroidissement transportant un autre réfrigérant et configuré pour refroidir l'habitacle.

9. Véhicule automobile électrique comprenant :
- un moteur d'entraînement,
- au moins un composant électronique de puissance pour alimenter le moteur d'entraînement,
- un habitacle (1),
- une batterie (2), et
- le circuit de commande de gestion thermique selon l'une quelconque des revendications 1 à 8.
